(19) Europäisches Patentamt
European Patent Office
Office européen des brevets

(11) Veröffentlichungsnummer: **0 170 102 B1**

(12) # EUROPÄISCHE PATENTSCHRIFT

(45) Veröffentlichungstag der Patentschrift: **14.03.90**

(51) Int. Cl.$^5$: **C 07 F 9/53**

(21) Anmeldenummer: **85108329.5**

(22) Anmeldetag: **05.07.85**

(54) **Verfahren zur Herstellung bifunktioneller tertiärer aromatischer Phosphinsulfide.**

(30) Priorität: **20.07.84 DE 3426722**

(43) Veröffentlichungstag der Anmeldung:
**05.02.86 Patentblatt 86/06**

(45) Bekanntmachung des Hinweises auf die Patenterteilung:
**14.03.90 Patentblatt 90/11**

(84) Benannte Vertragsstaaten:
**BE CH DE FR GB IT LI NL**

(56) Entgegenhaltungen:
**DE-B-1 238 024**

**THE JOURNAL OF ORGANIC CHEMISTRY, Band 42, Nr. 12, 10. Juni 1977, Seite 2190; G.A. OLAH et al.: "Friedel-Crafts Type Preparation of Triphenylphosphine 1a"**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Kleiner, Hans-Jerg, Dr. Ing.**
**Altkönigstrasse 11a**
**D-6242 Kronberg/Taunus (DE)**
Erfinder: **Weiss, Erwin, Dr.**
**Vorderheide 1**
**D-6238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 170 102 B1

**Beschreibung**

Die Erfindung bezieht sich auf ein Verfahren zur Herstellung von bestimmten bifunktionellen tertiären aromatischen Phosphinsulfiden, und zwar von Bis-(4-halogenphenyl)-phenyl-phosphinsulfiden. Sie sind wertvolle End- und Zwischenprodukte auf verschiedenen Sachgebieten.

Endprodukte sind Bis-(4-halogenphenyl)-phenyl-phosphinsulfide (und -oxide) z.B. auf dem Pflanzenschutzsektor als Insektizide und Akarizide (DE—OS 27 43 848 = US—PS 4 101 655).

Zwischenprodukte sind die Verbindungen z.B. auf dem Polymerensektor. Zum Einsatz auf diesem Gebiet müssen die Verbindungen zunächst (auf oxidativem Weg) in die entsprechenden Phosphanoxide überführt werden, die dann mit bestimmten Bisphenolen zu wertvollen Polymeren kondensierbar sind (DE—OS 32 03 186), z.B.:

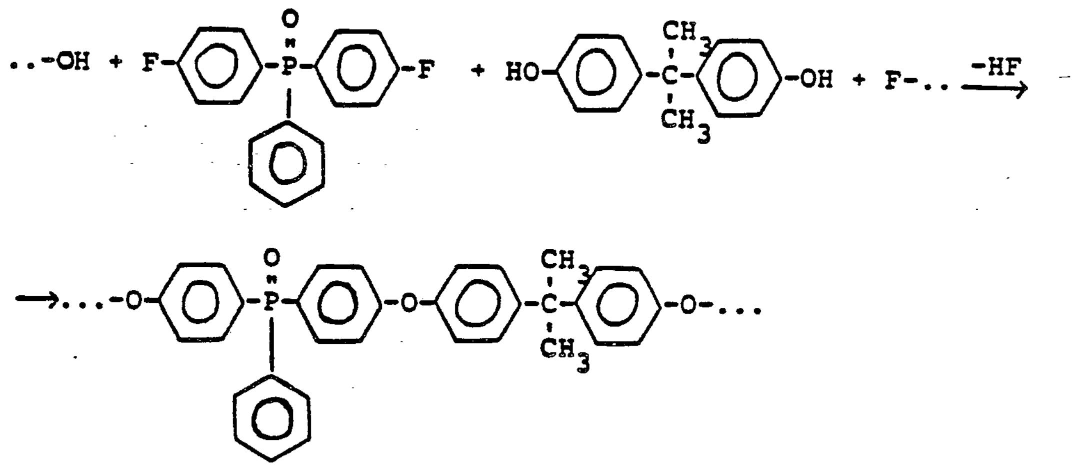

Die Polymeren zeichnen sich durch besondere Schwerbrennbarkeit und extreme thermische Belastbarkeit aus; sie sind zu Fasern, Folien und Formkörpern etc. verarbeitbar.

G. H. Olah et al. beschreiben in J. Org. Chem. *42,* 2190, daß Triphenylphosphinsulfid direkt aus Benzol durch Umsetzung mit Schwefel, Phosphortrichlorid und Aluminiumchlorid hergestellt werden kann. Sie bezeichnen dieses als Sonderfall, da Triarylphosphine bis dahin nur durch Umsetzung mit Organometallverbindungen, wie Phenylmagnesiumhalogenid oder Phenyllithium mit Phosphortrihalogeniden hergestellt werden konnten. Bis dahin sei die Umsetzung von Phosphortrichlorid mit Benzol unter Friedel-Crafts-Bedingungen weitgehend studiert worden, jedoch hätten nur Phenyldichlorphosphin und Diphenylchlorphosphin als Endprodukte erhalten werden können, aber es sie unter keinerlei Bedingungen möglich gewesen, die Reaktion so zu lenken, daß Triphenylphosphin erhalten werden konnte. Dies wurde auf ein ungünstiges Disproportionierungs-Gleichgewicht zurückgeführt.

Die Reaktion von Olah et al. ist auf die Herstellung des Triphenylphosphinsulfids beschränkt, also auf ein Endprodukt mit 3 gleichen aromatischen Resten. Andeutungen in Bezug auf die Möglichkeit, Produkte mit verschiedenen aromatischen Resten herzustellen, lassen sich aus der Arbeit von Olah et al. nicht entnehmen.

Die Bis-(4-halogenphenyl)-phenyl-phosphinsulfide können — wie in der vorerwähnten DE—OS 27 43 848 angegeben — z.B. durch Grignard-Reaktion von Dichlor-phenyl-phosphin mit Halogenphenylmagnesiumhalogenid sowie anschließender Umsetzung mit elementarem Schwefel hergestellt werden entsprechend den nachstehenden Reaktionsgleichungen (schematisch):

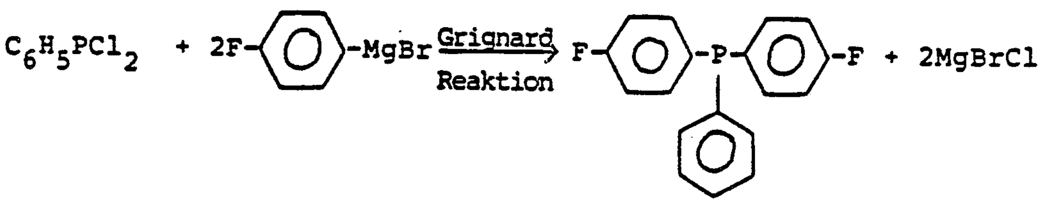


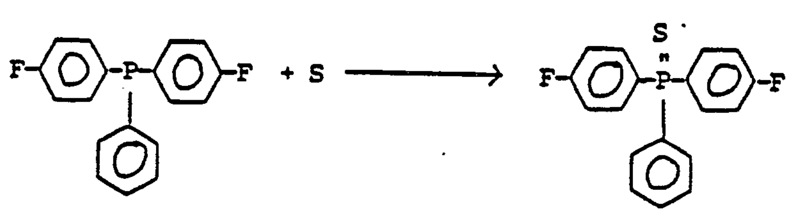

Wenn man in der zweiten Reaktionsstufe anstelle des elementaren Schwefels Wasserstoffperoxid ($H_2O_2$) einsetzt, gelangt man gleich zu den entsprechenden Phosphinoxiden:

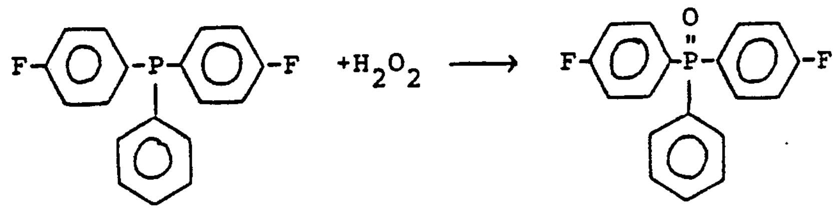

Die Phosphinoxide können alternativ auch durch Grignard-Reaktion von Phenylphosphonsäuredichlorid mit Halogenphenylmagnesiumhalogenid erhalten werden:

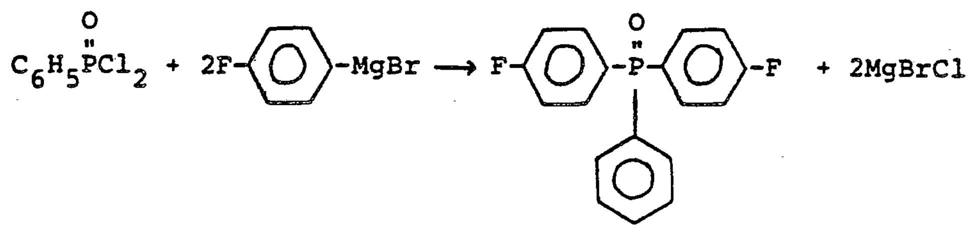

Schließlich ist die Herstellung von arylierten Phosphorthioverbindung wie z.B. von Bis-(4-halogenphenyl)-phenyl-phosphinsulfiden auch nach dem Verfahren der DE—PS 1 238 024 möglich durch Friedel-Crafts-Reaktion von Phosphorthiohalogenid-Verbindungen wie z.B. von Phenylthiophosphonsäuredichlorid $C_6H_5P(S)Cl_2$ mit aromatischen Verbindungen wie z.B. von Halogenbenzolen in Gegenwart einer mindestens äquimolaren Menge eines Friedel-Crafts-Katalysators (insbesondere von $AlCl_3$), bezogen auf die Phosphorthiohalogenid-Verbindung, und mit einer mindestens äquimolaren Menge der aromatischen Verbindungen, bezogen auf die zu ersetzenden Halogenatome, mit nachfolgender Zersetzung der entstandenen Katalysatorkomplexverbindung mit Wasser, Eis oder in an sich bekannter Weise durch Zusatz einer Verbindung, die mit dem Katalysator einen stärkeren Komplex bildet als die zu isolierende Phosphorthioverbindung. Für den Fall etwa der Herstellung des Bis-(4-fluorphenyl)-phenyl-phosphinsulfids nach diesem Verfahren wäre die entsprechende Reaktionsgleichung:

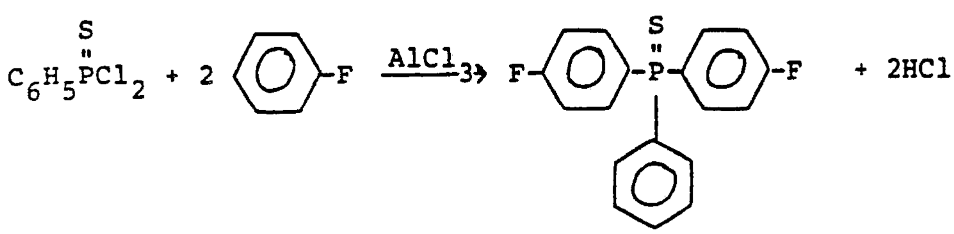


Die Herstellung dieser Verbindung sowie auch anderer Bis-(4-halogenphenyl)-phenyl-phosphinsulfide ist jedoch in der genannten DE—PS nicht durch Beispiele belegt. Die einzigen Beispiele, die sich auf die Umsetzung mit einem Halogenbenzol beziehen, sind die Beispiele 7, 8 und 9 (Umsetzung von $PSCl_3$ mit Chlorbenzol) sowie 15 und 16 (Umsetzung von $PSCl_3$ mit Fluorbenzol).

Nach Beispiel 7 werden Phosphorthiochlorid $PSCl_3$, $AlCl_3$ und Chlorbenzol $C_6H_5Cl$ im Molverhältnis 1:5,33:6,67 7 Stunden am Rückfluß erhitzt. Als Ausbeute werden 64%, bezogen auf eingesetztes $PSCl_3$, Tris-(chlorphenyl)-phosphinsulfid $PS(C_6H_4Cl)_3$ angegeben; das Produkt soll gemäß dem IR-Spektrum zu etwa gleichen Teilen des o- und des p-Isomeren bestehen.

In Beispiel 8 beträgt das Molverhältnis $PSCl_3:AlCl_3:C_6H_5Cl$ = 1:2:4. Nach 1 1/4 Stunden Erhitzen am Rückfluß sollen erhalten worden sein:

63,2% Bis-(chlorphenyl)-thiophosphinsäurechlorid
$(C_6H_4Cl)_2P(S)Cl$ (nach Umkristallisation), sowie eine nicht unbeträchtliche Menge eines Rückstandes, der aus einer Mischung aus isomeren Tris-(chlorphenyl)-phosphinsulfiden $(C_6H_4Cl)_3PS$ bestanden haben soll.

In Beispiel 9 war das Verhältnis $PSCl_3:AlCl_3:C_6H_5Cl$ = 1:2,5:1. Nach einstündigem Erhitzen zum Rückfluß sollen erhalten worden sein:

45,4% Chlorphenyl-thiophosphonsäuredichlorid $(C_6H_4Cl)P(S)Cl_2$,
19,7% Bis-(chlorphenyl)-thiophosphinsäurechlorid $(C_6H_4Cl)_2P(S)Cl$ als Isomerengemisch, und
18,3% Tris-(chlorphenyl)-phosphinsulfid $(C_6H_4Cl)_3P(S)$.

Von Isomerengemischen wird nur bei dem Produkt des Beispiels 7, dem Rückstand des Beispiels 8 und der Mittelfraktion des Beispiels 9 gesprochen. Es ist jedoch kaum vorstellbar, daß die anderen Chlorphenyl-Produkte dann etwa isomerenrein waren. Daher ist wohl bei allen Reaktionsprodukten von entsprechenden Isomerengemischen auszugehen.

Nach Beispiel 15 wurden $PSCl_3$, $AlCl_3$ und Fluorbenzol $C_6H_5F$ im Molverhältnis 1:5,33:6,67 4 Stunden zum Rückfluß erhitzt. Es sollen 79,5% praktisch isomerenreines Bis-(4-fluorphenyl)-thiophosphinsäurechlorid $(C_6H_4F)_2P(S)Cl$ mit nur einer Spur des o-Isomeren sowie ein geringfügiger Rückstand erhalten worden sein.

In Beispiel 16 betrug das Molverhältnis von $PSCl_3:AlCl_3:C_6H_5F$ = 1:2,2:1,1. Ergebnis nach 1 3/4-stündigem Erhitzen zum Rückfluß:

23,2% praktisch reines Fluorphenyl-thiophosphonsäuredichlorid $(C_6H_4F)P(S)Cl_2$,
14,2% Bis-(fluorphenyl)-thiophosphinsäurechlorid $(C_6H_4F)_2P(S)Cl$ (ohne Angabe der Isomerenreinheit) sowie

eine nicht ganz unbeträchtliche Menge eines braunen Rückstandes.

Um aus den nach diesen Beispielen in mehr oder weniger hohen Ausbeuten erhaltenen Bis-(4-halogenphenyl)-thiophosphin-säurechloriden die Bis-(4-halogenphenyl)-phenylphosphinsulfide zu bekommen, müßte man die Bis-(4-halogenphenyl)-thiophosphinsäurechloride nach ihrer Isolierung und gegebenenfalls Abtrennung von den Isomeren wohl einer weiteren Friedel-Crafts Reaktion mit Benzol unterwerfen.

Aus den Phosphinsulfiden könnte man dann die für den Polymerensektor erforderlichen Phosphinoxide durch Umsetzung z.B. mit $SOCl_2$ oder mit Oxidationsmitteln wie mit $KMnO_4$ gewinnen; vgl. etwa den Artikel von L. Maier — dem Erfinder auch des vorerwähnten DE-Patents 1 238 024 — in Helvetica Chimica Acta *47*, S. 120—132, insbesondere S. 124 (1964). Mit besonderem Vorteil können tertiäre Phosphinsulfide auch nach dem Verfahren gemäß der gleichzeitig eingereichten europäischen Patentanmeldung Nr. 85 108328.7 (EP—A—0170101) mittels $H_2O_2$ in einem zu mindestens etwa 20 Gew.-% aus niederen aliphatischen Carbonsäuren und/oder deren Anhydriden (Rest: andere inerte Lösungsmittel) bestehenden Lösungsmittel in die entsprechenden Phosphinoxide überführt werden.

Der Umweg über die tertiären aromatischen Phosphinsulfide zu den entsprechenden Phosphinoxiden ist hier deswegen erforderlich, weil die Friedel-Crafts-Reaktion von $POCl_3$ mit Benzol und Halogenaromaten nicht oder jedenfalls praktisch nicht gelingt.

Die bekannten Verfahren zur Herstellung von Bis-(4-halogenphenyl)-phenyl-phosphinsulfiden sind in verschiedener Hinsicht insbesondere für technische Belange nicht bzw. nicht ganz befriedigend. Die vorerwähnte Grignard-Raktion, ausgehend von Dichlor-phenyl-phosphin oder von Phenylphosphonsäuredichlorid und Halogenphenylmagnesiumhalogenid, ist technisch nicht ganz einfach durchführbar.

Die Friedel-Crafts-Reaktion gemäß DE—PS 12 38 024, ausgehend von $PSCl_3$ und Halogenbenzol, führt — ausweislich der Beispiele 7 bis 9 — jedenfalls im Falle des Einsatzes von Chlorbenzol als Halogenbenzol zu Ausbeuten von maximal nur etwa 63% (Beispiel 8) an einem — wohl aus etwa gleichen Teilen bestehenden — Isomerengemisch aus Bis-(4-chlorphenyl)- und Bis-(2-chlorphenyl)-thiophosphinsäurechlorid. Das Bis-(4-chlorphenyl)-thiophosphinsäurechlorid ist erstdie Vorstufe für das den Polymerensektor gewünschte Bis-(4-chlorphenyl)-phenylphosphinsulfid.

Es bestand daher die Aufgabe, ein verbessertes Verfahren zur Herstellung von Bis-(4-halogenphenyl)-phenylphosphinsulfiden zu finden.

Diese Aufgabe konnte erfindungsgemäß durch eine Weiterentwicklung des in der DE—PS 12 38 024 beschriebenen Verfahrens gelöst werden.

Erfindungsgegenstand ist daher ein Verfahren zur Herstellung tertiärer aromatischer Phosphinsulfide der Formel

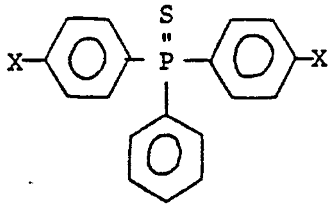

worin X = F, Cl oder Br,
durch Friedel-Crafts-Reaktion von P—Cl-Verbindung mit Benzol und einem Halogenbenzol;
das Verfahren ist dadurch gekennzeichnet, daß man

a) Phosphortrichlorid $PCl_3$ mit einem Aluminiumhalogenid und Benzol im Molverhältnis von 1:(1 bis 3,5):1 bis zur Beendigung der Reaktion erhitzt und anschließend ohne Isolierung eines Zwischenproduktes nach Zusatz einer — im Verhältnis zu $PCl_3$ — äquimolaren Menge elementaren Schwefels sowie der 2-bis 10-fachen molaren Menge Halogenbenzol der Formel $C_6H_5X$, worin X die vorerwähnte Bedeutung hat, wiederum bis zur Beendigung der Reaktion erhitzt und das Reaktionsprodukt wie üblich aufarbeitet, oder

b) Phosphorthiochlorid $PSCl_3$, Aluminiumhalogenid und ein Halogenbenzol der Formel $C_6H_5X$, worin X die vorerwähnte Bedeutung besitzt, im Molverhältnis 1:(1—3,5):2 bis zur Beendigung der Reaktion erhitzt, anschließend ohne Isolierung eines Zwischenproduktes nach Zusatz einer — im Verhältnis zu $PSCl_3$ — etwa 1 bis 10-fachen molaren Menge Benzol wiederum bis zur Beendigung der Reaktion erhitzt und den Reaktionsansatz wie üblich aufarbeitet.

In der zweiten Verfahrensstufe kann jeweils innerhalb des angegebenen Bereiches weiteres Aluminiumhalogenid zugegeben werden, falls nicht schon anfangs ein Molverhältnis von $PCl_3$:Al-Halogenid bzw. $PSCl_3$:Al-Halogenid = 1:(2—3,5) eingesetzt wurde.

Den Reaktionen a) und b) liegen folgende Reaktionsgleichungen zugrunde:

a) $PCl_3 + C_6H_6 \xrightarrow{\text{Al-Halogenid}} C_6H_5PCl_2 + HCl$ $S + C_6H_5PCl_2 + 2C_6H_5X \xrightarrow{\text{Al-Halogenid}} C_6H_5P(S)(C_6H_4X)_2 + 2HCl$

b) $PSCl_3 + 2C_6H_5X \xrightarrow{\text{Al-Halogenid}} (C_6H_4X)_2P(S)Cl + 2HCl$ $(C_6H_4X)_2P(S)Cl + C_6H_6 \xrightarrow{\text{Al-Halogenid}} C_6H_5P(S)(C_6H_4X)_2 + HCl$

Nach diesem Verfahren (und zwar sowohl nach Variante a) als auch nach Variante b)) werden in weitaus überwiegendem Maß die Bis-(4-halogenphenyl)-phenyl-phosphinsulfide — nämlich in Ausbeuten zwischen durchweg etwa 65 und 75% d.Th., bezogen auf das Ausgangs-$PCl_3$ bzw. — $P(S)Cl_3$ — und nur relativ wenig Isomere und anderen Nebenprodukte in einer Art Eintopf-Reaktion (weil kein Zwischenprodukt isoliert wird) erhalten. Dieses Ergebnis ist vor allem deswegen überraschend, weil jede der beiden Varianten a) und b), die ihrerseits aus jewils zwei Teilreaktionen bestehen, jedenfalls im Falle der Reaktion mit Chlorbenzol praktisch eine doppelt so hohe Ausbeute an dem Endprodukt Bis-(4-halogenphenyl)-phenyl-phosphinsulfid liefert, wie das Verfahren gemäß DE—PS 12 38 024 an dem Zwischenprodukt Bis-(4-chlorphenyl)-phosphinsäurechlorid. Das bezüglich der Umsetzung mit Chlorbenzol zu dem genannten Phosphinsäurechlorid günstigste Beispiel der DE—PS (Beispiel 8) liefert — wie einleitend bei der Beschreibung des Standes der Technik erwähnt — eine Ausbeute von 63,2% an — wie aus den übrigen Äußerungen in der DE—PS zu schließen ist — einem Gemisch aus etwa gleichen Teilen des o- und p-Isomeren, was eine Ausbeute an dem p-Isomeren = Bis-(4-chlorphenyl)-thiophosphinsäurechlorid von etwa 30 bis 35% bedeutet.

Aus Beispel 15 der DE—PS 1 238 024 geht ferner hervor, daß Bis-(4-fluorphenyl)-thiophosphinsäurechlorid offensichtlich nur beim Einsatz von Überschüssen an Fluorbenzol über die theoretische Menge von 2 Mol Fluorbenzol/Mol Phosphorthiochlorid hinaus in guten Ausbteuten gebildet wird. Da beim Einsatz von Überschüssen (1:6,67 Mol) bei diesem Beispiel aber praktisch keine tert.-Phosphinsulfide gebildet werden, war zu erwarten, daß Bis(4-fluorphenyl)-thiophosphinsäurechlorid auch mit (gegebenenfalls überschüssigem) Benzol praktisch kein tert.-Phosphinsulfid bildet, da nach L. Maier (a.a.O.) Fluorbenzol in Gegenwart von Al-Halogeniden gleich wie Benzol reagiert.

Als Aluminiumhalogenide werden für das erfindungsgemäße Verfahren vorzugsweise $AlCl_3$, $AlBr_3$ sowie Alkyl-aluminium-chlorid und -bromid eingesetzt; besonders bevorzugtes Aluminiumhalogenid ist $AlCl_3$.

Als Halogenbenzole $C_6H_5X$ kommen Fluor-, Chlor- und Brom-benzol infrage, wobei Fluor- und Chlorbenzol bevorzugt sind.

Zur Durchführung der Variante a) des erfindungsgemäßen Verfahrens werden $PCl_3$, das Al-Halogenid und Benzol in einem geeigneten Gefäß zusammengegeben, wobei das Molverhältnis der 3 genannten Reaktanten 1:(1 bis 3,5) (vorzugsweise 1 bis 2,5):1 beträgt. Es ist im Prinzip auch möglich, überschüssiges $PCl_3$ zu verwenden, was jedoch nach beendeter Umsetzung dann wieder dessen Entfernung (vorzugsweise destillativ) erfordert. Auch Überschüsse von Al-Halogenid sind möglich, aber nicht von Vorteil. Die Reaktanten werden dann — vorzugsweise unter Rückfluß — solange erhitzt, bis die Reaktion beendet ist. Die Reaktionstemperatur beträgt dabei im allgemeinen zwischen etwa 70 und 100°C, die Reaktionszeit etwa 3 bis 12 Stunden.

Es ist zweckmäßig, das Erhitzen unter Inertgasatmosphäre (z.B. Stickstoff oder Argon) durchzuführen.

Nach beendetem 1. Reaktionsschritt wird zweckmäßig abgekühlt. Die Reaktionsmischung wird nun ohne Isolierung eines Zwischenproduktes mit 1 Mol Schwefel und 2 bis 10 Mol Halogenbenzol, jeweils bezogen auf das umgesetzte $PCl_3$, versetzt. Im Falle des Einsatzes von Fluorbenzol werden vorzugsweise 3 bis 6 Mol, im Falle des Einsatzes von Chlor- und Brom-benzol vorzugsweise 6 bis 8 Mol verwendet.

Ein Zusatz von Al-Halogenid in dieser Stufe ist dann erforderlich, wenn in der ersten Stufe weniger als 2 Mol/Mol umgesetztes $PCl_3$ eingesetzt wurden.

Die Vermischung zur Vorbereitung des zweiten Reaktionsschrittes erfolgt zweckmäßig unter Kühlung. Das nun vorliegende Reaktionsgemisch wird dann in der Regel am Rückfluß wiederum bis zur Beendigung der Reaktion erhitzt, wobei die Temperaturen möglichst nicht über etwa 150°C (im Falle des Einsatzes von Chlor- und Brom-benzol) bzw. etwa 120°C (bei Einsatz von Fluorbenzol) steigen sollen. Die Reaktionszeit liegt hier normalerweise zwischen etwa 5 und 20 Stunden.

Variante b) des erfindungsgemäßen Verfahrens geht aus von $PSCl_3$ oder einer äquimolaren Mischung aus $PCl_3$ und elementarem Schwefel (die in Gegenwart von Al-Halogenid $PSCl_3$ gibt), Al-Halogenid und Fluor-, Chlor- oder Brombenzol im Molverhältnis von 1:(1 bis 3,5):2. Auch hier ist im Prinzip ein Überschuß an Al-Halogenid möglich, aber nicht vorteilhaft. Die Reaktanten werden gemischt und bis zur Beendigung der Reaktion erhitzt. Die Reaktionstemperatur soll beim Einsatz von Chlor- und Brom-benzol etwa 150°C und beim Einsatz von Fluorbenzol etwa 120°C nicht überschreiten. Die Reaktionszeit beträgt hier im

allgemeinen etwa 1 bis 10 Stunden. Es ist zweckmäßig, auch diese Reaktion unter Inertgasatmosphäre (Stickstoff, Argon etc.) durchzuführen.

Nach beendetem ersten Reaktionsschritt wird zweckmäßig abgekühlt und ohne Isolierung einer Zwischenstufe mit 1 bis 10 Mol, vorzugsweise etwa 3 bis 6 Mol Benzol, bezogen auf das Ausgangs-$PSCl_3$, sowie gegebenenfalls mit Al-Halogenid versetzt. Der Zusatz von weiterem Al-Halogenid ist dann erforderlich, wenn in der ersten Reaktionsstufe weniger als 2 Mol/Mol $PSCl_3$ eingesetzt wurde. Die Reaktionsmischung wird nun vorzugsweise am Rückfluß wiederum bis zur Beendigung der Reaktion erhitzt. Die Reaktionszeit liegt hier normalerweise zwischen etwa 8 und 20 Stunden.

Die Beendigung der einzelnen Teilreaktionen sowohl in Variante a) als auch in Variante b) des erfindungsgemäßen Verfahrens ist z.B. aus der Beendigung der Chlorwasserstoffentwicklung (siehe die Reaktionsgleichungen!) oder durch Verfolgung des Reaktionsfortgangs auf übliche Weise (z.B. mit chromatographischen Methoden) erkennbar.

In beiden Reaktionsstufen der zwei Varianten a) und b) des erfindungsgemäßen Verfahrens können auch inerte Lösungsmittel — insbesondere zwecks Regulierung der Reaktionstemperatur, wenn am Rückfluß erhitzt wird — eingesetzt werden. Solche inerte Lösungsmittel können z.B. sein:

aliphatische Kohlenwasserstoffe wie Petrolether, Hexan, Octan;

cycloaliphatische Kohlenwasserstoffe, wie Cyclohexan; Hydroaromaten wie Dekalin; etc.

Die Aufarbeitung der nach den beiden Varianten a) und b) anfallenden Reaktionsprodukte erfolgt im Prinzip in gleicher Weise nach bekannten Methoden Dazu werden die resultierenden Reaktionsmischungen zweckmäßig unter Kühlung mit überschüssigem Wasser oder einer wässrigen Mineralsäure (z.B. Salzsäure) zersetzt. Zur besseren Phasentrennung kann — falls nicht schon vorhanden — u.U. ein geeignetes organisches inertes Lösungsmittel zugesetzt werden, wofür auch die vorher genannten inerten Lösungsmittel in Frage kommen können. Die gesamte organische Phase wird nach der Trocknung einer Destillation unterworfen, falls Lösungsmittel oder überschüssiges Halogenbenzol bzw. Benzol abzutrennen ist. Die dabei anfallenden Destillationsrückstände stellen im wesentlichen die gewünschten Bis-(4-halogenphenyl)-phenyl-phosphinsulfide in roher Form dar. Deren Reinigung erfolgt in an sich bekannter Weise zweckmäßig durch Destillation oder Umkristallisation. Die durch Destillation leicht abtrennbaren Thiophosphinsäurehalogenide (die unvollständigen Umsetzungen entstammen) können bei Wiederholungsansätzen wieder mitverwendet werden. Dadurch läßt sich die Gesamtausbeute, die ansonsten zwischen etwa 65 und 75% d.Th., bezogen auf die (umgesetzte) Ausgangs-P-Verbindung, beträgt, noch steigern.

Die nachfolgenden Beispiele sollen nun der weiteren Erläuterung der Erfindung dienen.

Variante a):

Beispiel 1

Bis-(4-chlorphenyl)-phenyl-phosphinsulfid

13,73 g (0,1 Mol) Phosphortrichlorid,

29,3 g (0,22 Mol) Aluminiumchlorid und

7,81 g (0,1 Mol) Benzol

(Molverhältnis = 1:2,2:1) wurden unter Rühren in einer Stickstoffatmosphäre gemischt. Dann wurde auf 80°C erwärmt, wobei schwache Chlorwasserstoffentwicklung auftrat. Als die Chlorwasserstoffentwicklung nach 6 Stunden beendet war, wurde abgekühlt.

Zu der Reaktionsmischung wurden dann

3,2 g (0,1 Mol) Schwefel und

67,54 g (0,6 Mol) Chlorbenzol zugegeben und weitere 6 Stunden am Rückfluß gekocht. Dabei ergab sich am Ende eine Reaktionstemperatur von ca. 140°C. Die anfangs lebhafte Chlorwasserstoffentwicklung kam dabei nahezu vollständig zum Erliegen. Nun wurde abgekühlt und die Reaktionsmischung auf Eis gegossen. Die Phasen wurden getrennt und die wässerige Phase nochmals mit Chlorbenzol nachgewaschen. Nach dem Trocknen der vereinigten organischen Phasen über Natriumsulfat wurde filtriert und das Lösungsmittel bei 75°C/0,1 mbar abdestilliert. Es verblieben 31,2 g (ca. 86 % d.Th.) rohes Bis-(chlorphenyl)-phenyl-phosphinsulfid das im Verlauf einiger Wochen weitgehend durchkristallisierte.

Laut $^{31}$P-NMR und GC-Analyse bestand das Rohprodukt aus ca.

76% Bis-(4-chlorphenyl)-phenyl-phosphinsulfid,

8% isomerer Bis-(chlorphenyl)-phenyl-phosphinsulfide,

6% Phenyl-(4-chlorphenyl)-thiophosphinsäurechlorid,

6% Diphenyl-(4-chlorphenyl)-phosphinsulfid und

2,5% Tris-(4-chlorphenyl)-phosphinsulfid.

Bezogen auf das Ausgangs-$PCl_3$, ist dies:

ca. 65% Bis-(4-chlorphenyl)-phenyl-phosphinsulfid

ca. 7% isomere Bis-(chlorphenyl)-phenylpphosphinsulfide

ca. 5% Phenyl-(4-chlorphenyl)-thiophosphinsäurechlorid

ca. 5% Diphenyl-(4-chlorphenyl)-phosphinsulfid und

ca. 2% Tris-(4-chlorphenyl)-phosphinsulfid.

Beispiel 2

Bis-(4-fluorphenyl)-phenyl-phosphinsulfid und -oxid

13,73 g (0,1 Mol) Phosphortrichlorid
29,3 g (0,22 Mol) Aluminiumchlorid und
7,81 g (0,1 Mol) Benzol
(Molverhältnis 1:2,2:1) wurden 6 Stunden auf 80°C erwärmt.
Nach Zugabe von
3,2 g (0,1 Mol) Schwefel und
57,66 g (0,6 Mol) Fluorbenzol wurde 10 Stunden am Rückfluß gekocht, auf Eis gegossen und mit Methylenchlorid ausgeschüttelt.

Die organische Phase wurde im Rotationsverdampfer eingeengt und das rohe Phosphinsulfid nach dem Verfahren der gleichzeitig eingereichten Patentanmeldung 85 108 328.7 (EP—A—170 171) in das Phosphanoxid überführt. Dazu wurde in 100 ml Eisessig aufgenommen und bei 50°C innerhalb 1/2 Stunde 10 ml einer 35% igen Wasserstoffperoxidlösung zugetropft (unter Kühlung). Es wurde 30 Minuten nachgerührt, auf 20°C gekühlt, Schwefel abfiltriert und bei 100°C/20 mbar eingedampft. Der Rückstand wurde in 100 ml Wasser suspendiert, mit 2n-NaOH alkalisch gestellt und das rohe Phosphanoxid abfiltriert. Nach der Kugelrohrdestillation erhielt man bei 225°C/0,1 mbar

23,15 g (=74% d.Th. bezogen auf $PCl_3$) mit der Zusammensetzung:

87,5% Bis-(4-fluorphenyl)-phenyl-phosphinoxid
3,6% Diphenyl-(4-fluorphenyl)-phosphinoxid
6,3% Tris-(4-fluorphenyl)-phosphinoxid
3,6% Rest (unbekannt).
Bezogen auf das Ausgangs-$PCl_3$ ist dies:
ca. 65% Bis-(4-fluorphenyl)-phenyl-phosphinoxid
ca. 2% Diphenyl-(4-fluorphenyl)-phosphinoxid
ca. 5% Tris-(4-fluorphenyl)-phosphinoxid und
ca. 2,5% Rest (unbekannt).

Variante b)

Beispiel 3

Bis-(4-fluorphenyl)-phenyl-phosphinsulfid

Eine Mischung aus
16,94 g (0,1 Mol) Thiophosphorsäuretrichlorid $PSCl_3$
14,0 g (0,105 Mol) Aluminiumchlorid und
19,22 g (0,2 Mol) Fluorbenzol
(Molverhältnis 1:1,05:2) wurde unter Verwendung eines mit Eiswasser betriebenen Rückflußkühlers 6 Stunden auf 100°C (Ölbadtemperatur) erhitzt.
Anschließend wurden weitere
19,3 g (0,145 Mol) Aluminiumchlorid und
31,1 g (0,40 Mol) Benzol zugegeben, 10 Stunden am Rückfluß gekocht, abgekühlt und auf Eis gegossen.

Die wässerige Phase wurde sorgfältig dekantiert und nochmals mit Methylenchlorid nachgewaschen. Die vereinigten organischen Phasen wurden über $Na_2SO_4$ getrocknet, das Lösungsmittel abdestilliert und der Rückstand im Vakuum andestilliert.

Der Vorlauf enthielt nahezu ausschließlich
Bis-(4-fluorphenyl)-thiophosphinsäurechlorid (4 g), die recyclisierbar sind.

Anschließend wurde der Rückstand am Kugelrohr destilliert (Ofentemperatur 225°C/0,1 mbar). Es wurden 25,2 g (76,3% d.Th.) flüchtige Produkte erhalten, die aufgrund einer $^{31}$P-NMR-Analyse aus folgenden Produkten bestanden:

93,3% Bis-(4-fluorphenyl)-phenyl-phosphinsulfid
4,33% Diphenyl-(4-fluorphenyl)-phosphinsulfid
1,38% Trisphenyl-phosphinsulfid
0,99% Rest (unbekannt).
Bezogen auf das Ausgangs-$PSCl_3$ ist dies:
ca. 71% Bis-(4-fluorphenyl)-phenyl-phosphinsulfid
ca. 3,3% Diphenyl-(4-fluorphenyl)-phosphinsulfid
ca. 1% Triphenyl-phosphinsulfid und
ca. 0,75% Rest (unbekannt).

Wird das Vorlaufprodukt
Bis-(4-fluorphenyl)-thiophosphinsäurechlorid recycliert (Zugabe nach der ersten Stufe der Umsetzung, dann erhöht sich die Ausbeute noch etwas.

Beispiel 4

Bis-(4-chlorphenyl)-phenyl-phosphinsulfid

Eine Mischung aus

16,94 g (0,1 Mol) Phosphorthiochlorid

33,34 g (0,25 Mol) Aluminiumchlorid und

22,51 g (0,2 Mol) Chlorbenzol

(Molverhältnis 1:2,5:2) wurde unter $N_2$-Atmosphäre 2 Stunden auf 130°C (Ölbadtemperatur) erhitzt. Nach dem Abkühlen wurden

31,2 g (0,4 Mol) Benzol zugegeben und 10 Stunden am Rückfluß gekocht. Es wurde auf Eis gegossen und die Phasen nach Zugabe von Methylenchlorid getrennt. Nach Trocknung über Natriumsulfat, Filtration und

Abziehen des Lösungsmittels im Vakuum (75°C/0,1 mbar) blieben 33,8 g rohes Bis-(4-chlorphenyl)-phenylphosphinsulfid zurück. Das entspricht einer Ausbeute von 93% d.Th. (bzgl. Phosphorthiochlorid). Das Produkt kristallisierte im Verlauf einiger Tage nahezu vollständig.

Nach Kristallisation aus Eisessig wurden

25,5 g (70,2 % d.Th., bezogen auf $PSCl_3$) Bis-(4-chlorphenyl)-phenyl-phosphinsulfid erhalten.

Beispiel 5

Ein dem Beispiel 4 völlig analoger Ansatz wurde durchgeführt und das erhaltene Rohprodukt (vor der Kristallisation aus Eisessig) einer Kugelrohrdestillation unterworfen (Ofentemperatur bei 250°C/0,1 mbar). Man erhielt 30,5 g (84,0% d.Th.) flüchtige Produkte, die laut $^{31}P$-NMR und GC-Untersuchungen die Zusammensetzung besaßen:

79,3% Bis-(4-chlorphenyl)-phenyl-phosphinsulfid

10,2% Isomere Bis-(chlorphenyl)-phenyl-phosphinsulfide

6,0% Bis-(4-chlorphenyl)-thiophosphinsäurechlorid

2,6% Diphenyl-(4-chlorphenyl)-phosphinsulfid

0,6% Tris-(4-chlorphenyl)-phosphinsulfid

1,3% Unbekannte.

Bezogen auf das Ausgangs-$PSCl_3$, ist dies:

ca. 67% Bis-(4-chlorphenyl)-phenyl-phosphinsulfid

ca. 8,5% isomere Bis-(chlorphenyl)-phenyl-phosphinsulfide

ca. 5% Bis-(4-chlorphenyl)-thiophosphinsäurechlorid

ca. 2,2% Diphenyl-(4-chlorphenyl)-phosphinsulfid

ca. 0,5% Tris-(4-chlorphenyl)-phosphinsulfid und

ca. 1% Rest.

Beispiel 6

Ein dritter Ansatz wurde so durchgeführt, daß anstelle von Phosphorthiochlorid eine äquivalente Menge Phosphortrichlorid und Schwefel eingesetzt wurden.

Eine Mischung aus

13,73 g (0,1 Mol) $PCl_3$

3,02 g (0,1 Mol) Schwefel

33,34 g (0,25 Mol) Aluminiumchlorid und

22,51 g (0,1 Mol) Chlorbenzol

wurden vermischt. Nach Abklingen der Selbsterwärmung wurde noch 2 Stunden auf 130°C erwärmt, etwas abgekühlt und

31,2 g (0,4 Mol) Benzol zugegeben und 10 Stunden am Rückfluß gekocht. Die Aufarbeitung erfolgt wie in Beispiel 4.

Es wurden

24,2 g (66,6% d.Th. bzgl. $PCl_3$) rohes Bis-(chlorphenyl)-phenyl-phosphinsulfid erhalten.

**Patentansprüche**

1. Verfahren zur Herstellung tertiärer aromatischer Phosphinsulfide der Formel

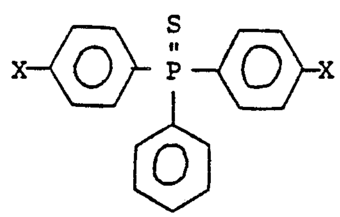

worin X = F, Cl oder Br ist,

durch Friedel-Crafts-Reaktion von P-Cl-Verbindungen mit Benzol und einem Halogenbenzol, dadurch gekennzeichnet, daß man

a) Phosphortrichlorid, ein Aluminiumhalogenid und Benzol im Molverhältnis von 1:(1—3,5):1 bis zur Beendigung der Reaktion erhitzt, anschließend ohne Isolierung eines Zwischenproduktes nach Zusatz einer — im Verhältnis zum Phosphortrichlorid — äquimolaren Menge Schwefel sowie der 2- bis 10-fachen molaren Menge Halogenbenzol der Formel $C_6H_5X$, worin X die vorerwähnte Bedeutung besitzt, wiederum bis zur Beendigung der Reaktion erhitzt und den Reaktionsansatz in üblicher Weise aufarbeitet, oder

b) Phosphorthiochlorid $PSCl_3$, ein Aluminiumhalogenid und ein Halogenbenzol der Formel $C_6H_5X$, worin X die vorerwähnte Bedeutung besitzt, im Molverhältnis 1:(1—3,5):2 erhitzt, anschließend ohne Isolierung eines Zwischenproduktes nach Zusatz einer — im Verhältnis zu $PSCl_3$ — 1 bis 10-fachen molaren Menge Benzol wiederum bis zur Beendigung der Reaktion erhitzt und den Reaktionsansatz in üblicher Weise aufarbeitet.

2. Verfahren nach Anspruch 1, dadurch gekennzeichnet, daß jeweils in der zweiten Verfahrensstufe innerhalb des angegebenen Bereiches weiteres Aluminiumhalogenid zugesetzt wird, falls nicht schon anfangs ein Molverhältnis des Phosphortrichlorids bzw. Phosphorthiochlorids zum Aluminiumhalogenid von 1:(2 bis 3,5) angewendet wurde.

3. Verfahren nach Anspruch 1 oder 2, dadurch gekennzeichnet, daß man als Aluminiumhalogenid Aluminiumchlorid $AlCl_3$ verwendet.

4. Verfahren nach einem oder mehreren der Ansprüche 1 bis 3, dadurch gekennzeichnet, daß man als Halogenbenzol Fluor- oder Chlorbenzol verwendet.

5. Verfahren nach einem oder mehreren der Ansprüche 1 bis 4, dadurch gekennzeichnet, daß man jeweils in der zweiten Verfahrensstufe bis zur Beendigung der Reaktion auf Temperaturen zwischen etwa 70 und 150°C erhitzt.

**Revendications**

1. Procédé pour préparer des sulfures de phosphines aromatiques tertiares répondant à la formule

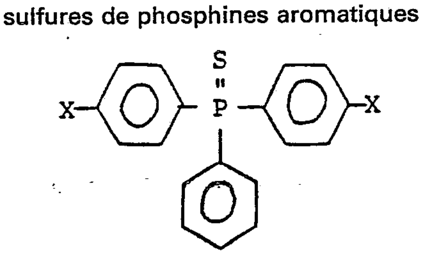

dans laquelle X représente F, Cl ou Br, par une réaction de Friedel-Crafts entre des composés P—Cl, le benzène et un halogénobenzène, procédé caractérisé en ce que:

a) on chauffe du trichlorure de phosphore avec un halogénure d'aluminium et du benzène dans un rapport molaire de 1:(1 à 3,5):1 jusqu'à ce que la réaction soit terminée, puis, sans isoler un corps intermédiaire et après avoir ajouté une quantité équimolaire (par rapport au trichlorure de phosphore) de soufre élémentaire ainsi qu'une quantité représentant d'environ 2 à 10 fois la quantité molaire d'un halogénobenzène de formule $C_6H_5X$ dans lequel X a la signification qui lui a été donnée ci-dessus, on chauffe à nouveau jusqu'à ce que la réaction soit terminée et on soumet le mélange réactionnel à un traitement complémentaire habituel, ou

b) on chauffe le thiochlorure de phosphore $PSCl_3$, un halogénure d'aluminium et un halogénobenzène de formule $C_6H_5X$ dans lequel X a la signification indiquée ci-dessus, dans un rapport molaire de 1:(1—3,5):2, puis, sans isoler un corps intermédiaire et après avoir ajouté un quantité de benzène représentant d'environ 1 à 10 fois la quantité molaire (par rapport à $PSCl_3$), on chauffe à nouveau jusqu'à ce que la réaction soit terminée, et on soumet le mélange réactionnel à un traitement complémentaire habituel.

2. Procédé selon la revendication 1, caractérisé en ce que, dans chacune des secondes étapes du procédé, on ajoute, tout en restant dans l'intervalle indiqué, une quantité supplémentaire de l'halogénure d'aluminium lorsqu'on n'a pas ajusté dès le début un rapport molaire du trichlorure de phosphore ou du thiochlorure de phosphore à l'halogénure d'aluminium de 1:(2 à 3,5).

3. Procédé selon l'une des revendications 1 et 2, caractérisé en ce qu'on utilise, comme halogénure d'aluminium, le chlorure d'aluminium $AlCl_3$.

4. Procédé selon l'une quelconque des revendications 1 à 3, caractérisé en ce qu'on utilise, comme halogénobenzène, le fluoro-benzène ou le chloro-benzène.

5. Procédé selon l'une quelconque des revendications 1 à 4, caractérisé en ce que, dans chacune des secondes étapes du procédé, ou chauffe à des températures comprises entre environ 70 et 150°C jusqu'à ce que la réaction soit terminée.

**Claims**

1. A process for the preparation of tertiary aromatic phosphine sulfides of the formula

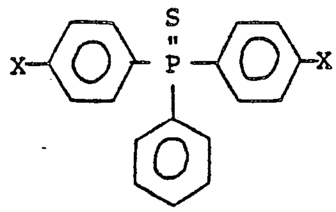

wherein X = F, Cl or Br, by means of a Friedel-Crafts reaction of P—Cl compounds with benzene and a halogenobenzene, which comprises

a) heating phosphorus trichloride, an aluminum halide and benzene in a molar ratio of 1:(1—3.5):1 until the reaction has ended, then, without isolation of an intermediate and after the addition of an equimolar quantity — relative to the phosphorus trichloride — of sulfur and of a 2-fold to 10-fold molar quantity of halogenobenzene of the formula $C_6H_5X$, in which X has the abovementioned meaning, heating the mixture again until the reaction has ended, and working up the reaction mixture in the usual manner, or

b) heating phosphorus thiochloride $PSCl_3$, an aluminum halide and a halogenobenzene of the formula $C_6H_5X$, in which X has the abovementioned meaning, in a molar ratio of 1:(1—3.5):2, then, without isolation of an intermediate and after the addition of a 1-fold to 10-fold molar quantity — relative to $PSCl_3$ — of benzene, heating the mixture again until the reaction has ended and working up the reaction mixture in the usual manner.

2. The process as claimed in claim 1, wherein, if a molar ratio of phosphorus thiochloride to aluminum halide of 1:(2 to 3.5) has not already been used from the start, further aluminum halide is added, within the indicated range, in the second process step in each case.

3. The process as claimed in claim 1 or 2, wherein aluminum chloride, $AlCl_3$, is used as the aluminum halide.

4. The process as claimed in one or more of claims 1 to 3, wherein fluorobenzene or chlorobenzene is used as the halogenobenzene.

5. The process as claimed in one or more of claims 1 to 4, wherein, in each case in the second process step, the heating is carried out at temperatures of between about 70 and 150°C until the reaction has ended.